# NEW EUROPEAN PATENT SPECIFICATION

(11) **EP 0 300 582 B2**
(45) Date of publication and mention of the opposition decision: **03.02.1999**
(45) Mention of the grant of the patent: 21.10.1992
(21) Application number: 88201585.2
(22) Date of filing: 21.07.1988
(51) Int. Cl.: A01J 7/00, G01S 15/88, G01S 15/42

(54) **An implement for and a method of milking an animal**
Verfahren und Vorrichtung zum Melken eines Tieres
Dispositif et procédé de traite d'un animal

(30) Priority: 23.07.1987 NL 8701735
(43) Date of publication of application: 25.01.1989
(60) Divisional application: 91108078.6
(73) Proprietor: MAASLAND N.V., 3155 PD Maasland (NL)
(72) Inventor: Bom, Cornelis Johannes Gerardus, Rozenburg (NL); van den Berg, Karel, Bleskensgraaf (NL)
(74) Representative: Corten, Maurice Jean F.M.

(56) References cited:
- EP-A- 209 202
- EP-A- 213 660
- EP-A- 0 091 892
- EP-A- 0 098 558
- EP-A- 0 188 303
- EP-A- 0 191 517
- EP-A- 0 209 202
- EP-A- 0 213 660
- EP-A- 0 229 682
- WO-A-85/02973
- DE-A- 3 307 384
- GB-A- 2 007 486
- US-A- 3 726 252
- US-A- 4 010 714

## Description

The invention relates to an implement for milking an animal, e.g. a cow, which implement includes a milking parlour where the animal can be present in a substantially predetermined position and a robot arm carrying teat cups near its end, which robot arm is provided with a substantially vertical first pivot pin, around which the end of the robot arm is capable of pivoting in a substantially horizontal plane, which robot arm is furthermore pivotable about a substantially vertical second pivot pin which is located outside the milking parlour, or near the wall thereof, and approximately in the region of the animal's udder or still further to the rear.

A suchlike implement is already known from the European patent application EP-A-0 188 303. The herein described robot arm approaches the animal's udder from aside, which means that the robot arm is in the reach of the animal's hind leg and therefore susceptible to kicks. This means that the robot arm can be damaged or disordered. To prevent this it is obvious that the leg of the animal should be tied up or otherwise fixated. This, however, implies disadvantages, one of them being the extra material and constructive effort needed to come to an automatic fixation of a leg. The other disadvantage is more serious, as if involves in the principle of automatic milking; by keeping the animal in a fixed pose all the time during milking, the animal feels uncomfortable and some animals, after a while, become reluctant to enter the milking parlour by theirselves. This means that someone has to drive them into the parlour which, on its turn, is an undermining of the principle of automatic milking. The underlying invention seeks to overcome both these problems and has for its object to provide a comparatively cheap implement and method by means of which the teat cups can be connected to the feats of the animal's udder in a reliable and efficient manner.

To that end, according to the invention, there is arranged a robot arm which approaches the animal's udder substantially from the front side, whereby the first pivot pin can be positioned between the animal's legs, the end of the robotarm being movable relative to the milking parlour, substantially in a longitudinal direction by changing its distance to said first pivot pin, the said robot arm being connected via the second pin to a frame which is movable relative to the milking parlour in the longitudinal direction, while the implement furthermore is provided with means for individually applying each teat cup to a teat by means of a substantially upward movement of the relevant teat cup.

In accordance with a still further feature of the invention, there is provided a sensor device capable of establishing the animal's position in the milking parlour, in particular the animal's position in the longitudinal direction relative thereto. In accordance with a further feature of the invention, once the animal's position in the longitudinal direction of the milking parlour has been established, it is possible to move the movable frame in dependence on the animal's position, which movement is effected also in particular in the longitudinal direction relative to the milking parlour.

In accordance with a still further feature of the invention, the sensor device for establishing the animal's position is connected mechanically to the movable frame, so that the said frame, and hence the robot arm, can move forwardly or rearwardly in response to any movement of the animal in either of the said directions. In this connection, there may be provided means for determining the position of the sensor device relative to the robot arm in dependence on the relevant animal.

In addition, in accordance with the invention, the sensor device is provided with a stop which bears against the animal, while there are arranged actuating means for moving the sensor device in dependence on the position of the stop. The use of these actuating means renders it possible to limit the pressure against the hind side of the cow to a minimum or to adjust same at wish by means of e.g. an adjustable spring.

In accordance with a still further feature of the invention, the robot arm is movable in height, which movability may be effected by fitting the robot arm movably in height to the movable frame.

The invention furthermore relates to a robot arm having provided at the upperside near the end thereof detection means capable of establishing the position of an object, e.g. a teat, in a plane the said plane being substantially of a flat or a conical shape. In accordance with a further feature of the invention, the plane is positioned above a teat cup which is arranged near the end of the robot arm and is carried thereby. By adjusting the robot arm to different positions in height, it is possible to find a position wherein the required or desired number of teats are located in the sad plane, as well as to establish the position of these teats relative to the detection means and/or to the end of the robot arm and the teat cups connected thereto. In this connection, use is made of the circumstance that, for a given animal, the height of the teats above the floor surface does not vary strongly, even not when she moves about.

In accordance with the invention, the detection means are provided with a sensor which transmits and/or receives a directional signal, which sensor may be e.g. an ultrasonic transducer. In order to obtain a more accurately directed signal, the signal can be reflected by a concave mirror located near the sensor, it being possible for the angle of divergence at which the signal is transmitted to be reduced from e.g. 10° to e.g. 4°. In this connection, the mirror can deflect the signal through an angle of approximately 90°, so that the distance covered by the signal is increased, which may be advantageous for an ultrasonic sensor. In accordance with a further feature of the invention, the sensor and/or the mirror is capable of pivoting or rotating, preferably about an upwardly directed axis, i.e. an axis which is at an angle with the horizontal plane. Alternatively, according to the invention, the rotational pivoting movement can be effected about a substantially vertical axis. It should be noted that the teats of an animal usually extend substantially in the vertical direction, so that signals transmitted in a substantially horizontal direction are reflected in an advantageous manner.

In accordance with a still further feature of the invention, the sensor and/or the mirror can perform a reciprocating movement within a predetermined area, which area may extend through an angle of 180° and, preferably, be directed rearwardly.

In accordance with a further feature of the invention, a computer may be present to calculate the position of a detected object (teat or feats) relative to the end of the robot arm, and for producing signals on the basis of which control means can move the robot arm, so that a feat cup can be moved to under a feat of the animal's udder. These control means may be fitted with hydraulic and/or pneumatic operating cylinders which steer the robot arm directly to the desired location or impart a given movement thereto until it is detected that a desired location has been reached.

In accordance with a further feature of the invention, the feat cup is connected to the robot arm by a flexible connecting member which is capable of forming a flexible connection between the robot arm and the feat cup during milking and is capable of drawing the feat cup to the robot arm, e.g. after milking or when the connection of the feat cup to the feat has not been successful. In accordance with the invention, the flexible connecting member may be a wire or rope e.g. made of a synthetic resin material and/or a metal, and that therefor there are provided guide means which are constituted by rollers or similar component parts having rounded corners.

According to the invention, the flexible connecting members may also be connected to a teat cup holder to which the feat cup is connected pivotably preferably near its upper end, the pivotal axis of which is at an angle with the vertical, the said axis passing through the aperture of the teat cup, i.e. through the entrance to the space wherein the teat is located during milking, so that during pivoting this aperture substantially remains in the same place. Such a connection between the teat cup and the teat cup holder renders it possible for the teat cup to have a certain freedom of movement when the teat cup holder is connected to the robot arm, which may be of importance in order to adapt the position of the feat cup to that of the relevant teat.

In addition, according to the invention, there are provided drive means for pulling the connecting member, so that the teat cup, which during milking is remote from the end of the robot arm, can be pulled towards the robot arm. In accordance with a further feature of the invention, the drive means may comprise a pneumatic or hydraulic cylinder accommodated in the robot arm.

In addition, in accordance with the invention, the teat cups can be moved upwardly relative to the robot arm, and means are provided for producing a vacuum in the teat cup, approximately simultaneously with the upward movement, so that the teat cup is sucked to the teat or the teat is sucked into the teat cup, respectively.

In accordance with the invention, for each teat cup, the robot arm may be provided near its end with an upwardly slidable supporting element, against which the teat cup can be pulled by means of the flexible connecting member. In this situation, in accordance with the invention, the supporting element is provided with at least one recessed portion through which the flexible connecting member passes, the said recessed portion being in substance a vertically extending slot.

In addition, in accordance with the invention, there may be provided means for closing the milk hose and/or the pulsating hose for the period of time wherein the feat cup is supported by the robot arm. These means may be fastened in or to the robot arm. In accordance with a feature of the invention, a portion of the hose applied in a holder is flattened by means of a lever which is operated simultaneously with the upward movement of the feat cup relative to the robot arm. It is then possible to have the same control means, such as a control cylinder, operate both the upward movement of the feat cup and the closing of the milk hose and/or the pulsating hose. In accordance with the invention, a cylinder/piston unit is connected by means of its one end to a control lever for upwardly moving the feat cup and by means of its other end to a control lever for flattening the hose, so that both actions can be performed at least substantially simultaneously.

There are provided means for moving the robot arm, once an animal has entered the milking parlour, to a position wherein the sensor scans a plane probably containing the ends of the (rear) teats. Since the position of the teats is not always the same, the robot arm may first be moved to a low position whereafter it may be moved upwardly until the sensor detects one or more teats, there are provided control means which, on the basis of the information produced by the sensor, moves the end of the robot arm or the sensor provided thereon to approximately halfway below the udder. The control means are of such a design that subsequently the sensor orients itself to one of the feats and establishes its position, whereafter the relevant teat cup is moved to below that teat and is connected thereto by means of an upward movement. In this connection the sensor can orient itself to a substantially vertical edge of the outline of the teat, i.e. to a position where the signal transmitted and received by the sensor is not always reflected in full.

The invention furthermore relates to a method of milking an animal, e.g. a cow, whereby the animal is guided to the milking parlour and is recognized therein by means of an animal recognition system, whereafter a robot arm assumes a previously determined starting position. Such a method is e.g. known from the European patent application EP-A-0 229 682. This method, however, assumes a sensor which scans in a predominantly vertical direction to find parts of the udder that are closer to the sensor than the other parts of the udder. Furthermore the therein described method is suitable and even leads to an automatic milking implement whereof the robot arm or at least the sensor itself is located below the animal. Although such a method, and also the related implement, may work very fine there are reasons, as pointed out earlier, which make an implement and sensor location below floor level less attractive. The invention therefore has for its object to provide for a method on the basis of which a favourable construction can be made.

Therefore, according to the invention, there is thought out a method according to claim 27. In accordance with the invention, a plurality of teat cups carried by the robot arm is sequentially applied to the various teats of the animal's udder, first the teats that are in a more rearward position being provided with a teat cup. When the teat cups are applied on an udder having four teats, as in the case of a cow, the sensor is located, during application of the teat cups to the rearmost teats, approximately between the foremost teats. By positioning the teat cups intended for the rearmost feats in such a manner on the robot arm relative to the sensor that the relevant teat cups are located at some centimetres on either side of a centre line in the longitudinal direction of the milking parlour, the sensor being provided on the said centre line, the sensor remains, during application of those teat cups, in a position approximately in the centre under the animal (in the symmetry plane), so that if does not collide with the other teats.

In addition, in accordance with the invention, the teat cups remain connected to the robot arm via a flexible connecting member, by means of which the teat cup is pulled towards and against a place intended therefor near the end of the robot arm, e.g. when the milking with the relevant teat cup has ended or when the application of the teat cup to the relevant teat has failed. The flexible connecting member may consist of one or more cables, ropes or wires or of the hoses used for milking.

For a better understanding of the invention and to show how the same may be carried into effect, an embodiment thereof will now be described with reference to the accompanying drawings, in which:
Figure 1 is a side view of a cow present in a milking parlour;
Figure 2 is, to an enlarged scale, a more detailed part of the side view according to Figure 1;
Figure 3 is a partial plan view taken in the direction of the arrow III in Figure 2;
Figure 4 is a cross-sectional view taken on the line IV-IV in Figure 2;
Figure 5 is a cross-sectional view in accordance with Figure 4, the robot arm being in the operational position;
Figure 6 is a horizontal cross-sectional view of part of the robot arm;
Figure 7 is a partially vertical cross-section through part of the robot arm;
Figure 8 is a cross-sectional view taken on the line VIII-VIII in Figure 7, and
Figure 9 is a partial cross-sectional view taken on the line IX-IX in Figure 6.

In the various drawings, the embodiment is shown only schematically.

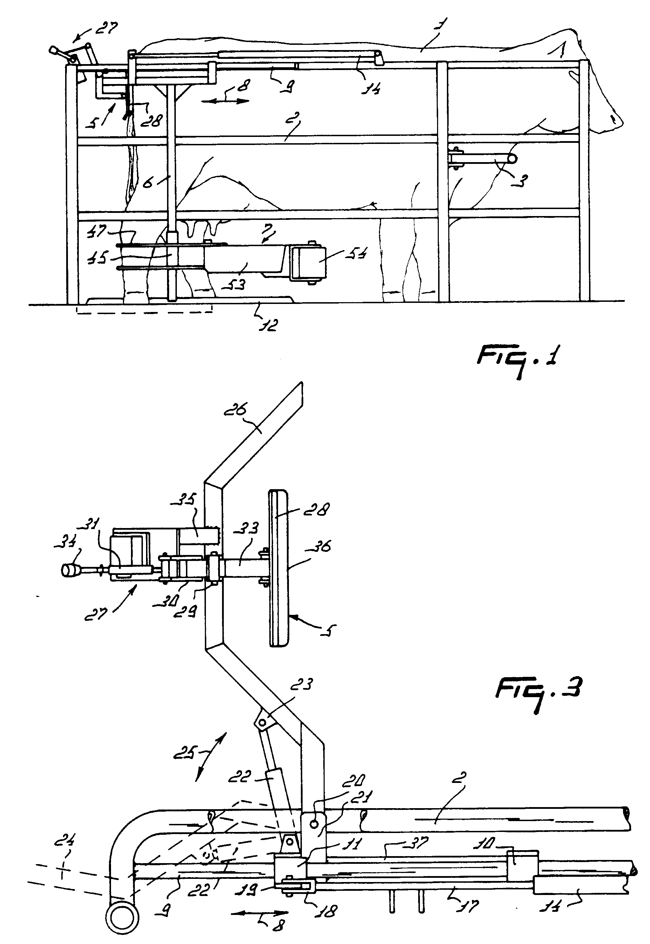

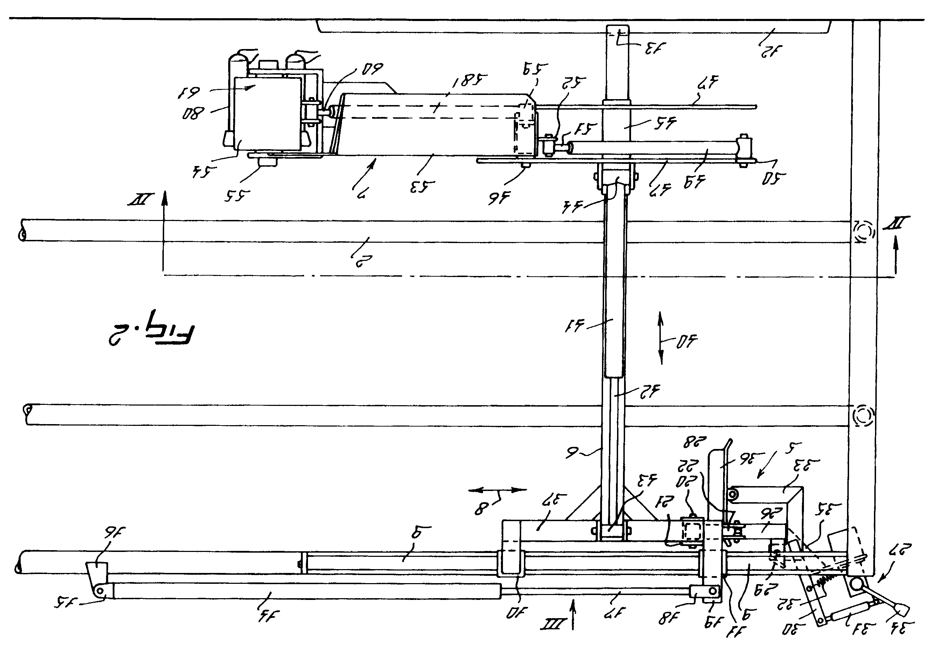

In the side view of the implement of Figure 1 there is shown a cow 1 which is present in the milking parlour, the milking parlour being enclosed by a railing 2 which limits the freedom of movement of the animal 1 in a lateral direction. The milking parlour is entered by the animal from the rear, while a pivotal stop 3 is arranged near the front side, which stop 3 constitutes a boundary for the animal 1 in the forward direction. By providing the front side of the milking parlour with e.g. a feed unit, the animal will advance sufficiently far, i.e. until against the stop 3.

The milking parlour floor has a recess 4, which is arranged such that the animal will not put her hind feet thereon, e.g. because its bottom extends obliquely inwardly and downwardly, so that the hind legs of the animal are wide apart and on either side of the recess 4. The recess 4 may have a drain for discharging the animal's excrements, if any.

Once the animal has entered the milking parlour, a sensor device 5 is pivoted against her rear side, as will be described in further detail with reference to Figure 3. At the side of the milking parlour there is arranged a substantially vertical frame beam 6, which frame beam 6 at its upper end is provided with a longitudinal guide means and to which near its lower end a robot arm 7 is fitted, as will be set out in further detail hereinafter.

Figure 2 shows in greater detail the features shown roughly in Figure 1. Figure 2 shows part of the railing 2, while there is indicated how the vertical frame beam 6 is capable of moving with respect to the milking parlour in the longitudinal direction as denoted by the arrows 8. For that purpose, the railing 2 is provided with a guide rod 9 along which can move two interconnected slide blocks 10, 11, the said slide blocks 10, 11 being interconnected by means of a horizontal frame beam 37 secured to the vertical frame beam 6. Near the floor, the frame beam 6 is guided by guide rail 12, along which the lower portion 13 of frame beam 6 slides. This sliding movement in the longitudinal direction of the frame beams 6 and 37 is effected by means of an operating cylinder 14, the end 15 of which is connected to the railing 2 via a support 16 and the piston rod 17 of which is connected to a support 19 attached to the frame beam 37. It will be obvious that by operating the cylinder 14, which can be done both pneumatically and hydraulically, there is effected a shift of the frame beams 6 and 37 in the longitudinal direction.

The frame beam 37 is furthermore provided with a sensor device 5, which sensor device 5 is shown in plan view in Figure 3.

As is shown in Figure 3, the sensor device 5 is connected pivotably about a pivot pin 20 to a support 21, which support 21 is attached to the frame beam 37. The pivotal movement of the sensor device 5 is effected by means of an operating cylinder 22, one end of which is connected to the frame beam 37 and the other end to a support 23 of the sensor device 5. In the position shown in Figure 3, the sensor device 5 is in the operative position, whilst broken lines 24 indicate the position of the sensor device when the animal enters the milking parlour. The pivotal movement of the sensor device 5 is indicated by means of arrows 25.

The sensor device 5 is fitted with a bent frame 26 which constitutes the rear fence of the milking parlour. The frame 26 comprises control means 27 to which is connected a sensor 28, which sensor 28 is adapted to bear against the rear side of the animal. The sensor 28 including a cushion 36 is connected pivotably about a horizontal pivot pin 29 (see Figure 2) to the frame 26 and is furthermore provided with a lever 30 that is connected to the control mechanism 27 via an adjustable intermediate shaft 31. There is also provided a spring 32, which spring 32 keeps an arm 33 to which the sensor 28 is connected in the position as shown.

The control mechanism 27 operates the operating cylinder 14 such that the piston rod 17 is displaced therein, i.e. the frame beams 6 and 37 in Figure 2 move to the right, until the sensor 28 comes to bear against the rear side of an animal, while the arm 33, the lever 30 and the intermediate shaft 31 tilt in such a manner that the control mechanism 27 fixes the operating cylinder 14. When the animal moves somewhat to the rear, thereby causing the sensor device 5 (Figure 2) to be moved to the left and the tilt of the arm 33, the lever 30 and the intermediate shaft 31 to be increased still further, the control mechanism 27 operates the operating cylinder 14 in such a manner that the piston rod 17 moves to the left, as a result of which the frame beams 6 and 37 move along with the animal to the left. It will be obvious that thus the control mechanism 27 so controls the operating cylinder 14 that the frame beams 6 and 37 always remain approximately in the same position relative to the animal in the longitudinal direction. The control mechanism 27 includes a handle 34 by means of which, optionally, the displacement of the frame beams can be effected by hand. Optionally, the pressure of sensor 28 against the rear side of the animal can be adjusted to any desired pressure. As is apparent from Figure 3, the control mechanism 27 is fitted to the frame 26 by means of a support 35.

A robot arm 7 (Figure 2) is connected slidably in height (arrows 40) to the frame beam 6. The sliding movement in height is effected by means of an operating cylinder 41 having a piston rod 42, the one end 43 of which is connected to the frame beams 6 and 37 in the place where the said frame beams are interconnected. The other end 44 of the operating cylinder 41 is connected to a slide block 45 which is capable of moving in height along the frame beam 6 in dependence on the operation of the operating cylinder 41.

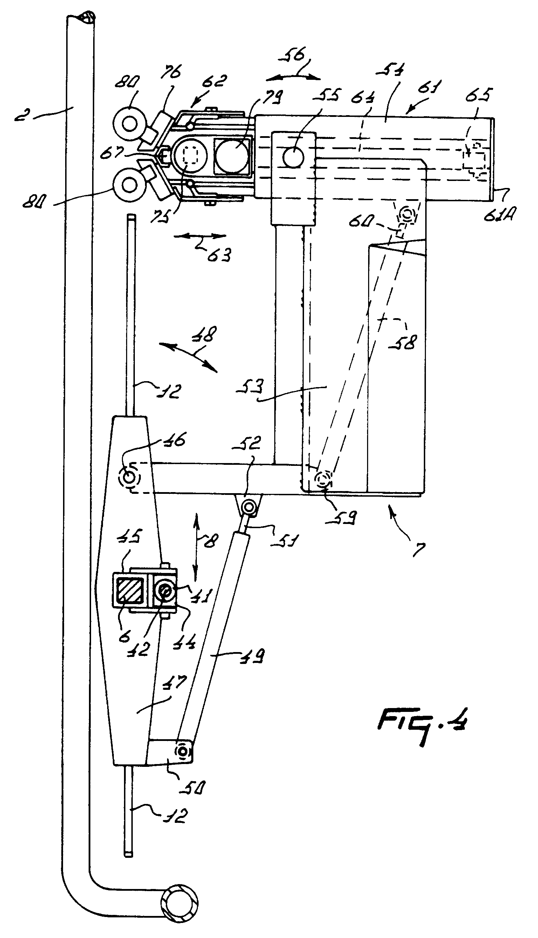

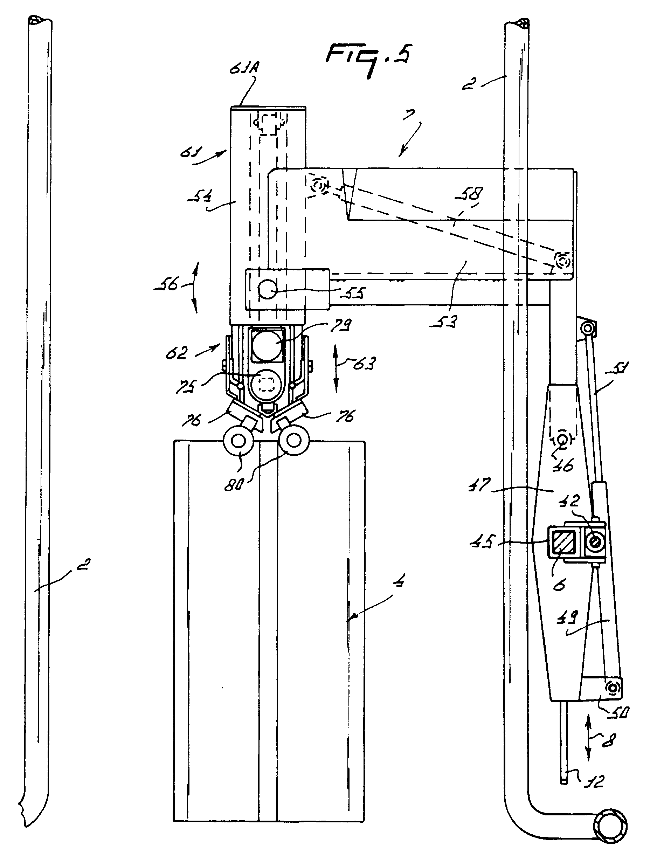

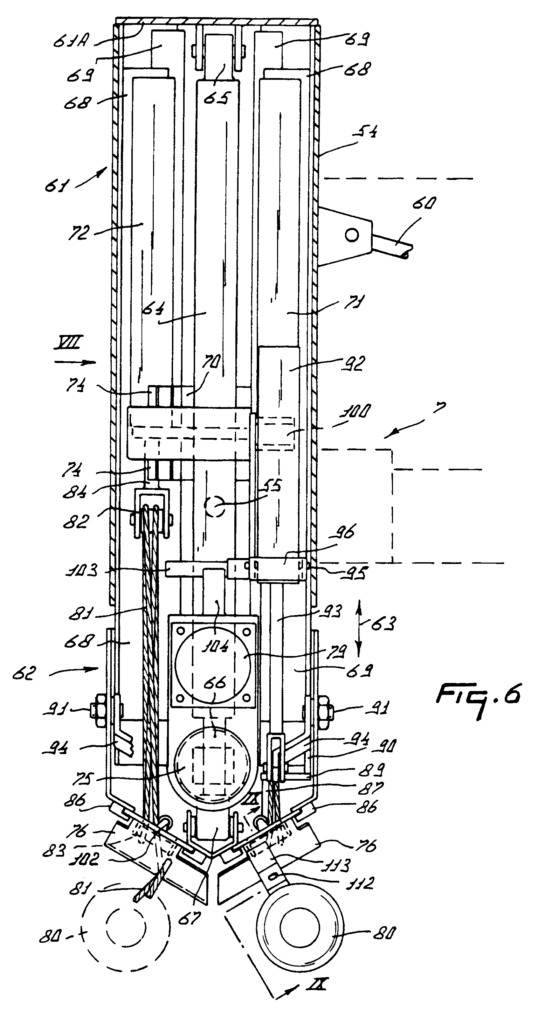

The robot arm 7 is shown in greater detail in Figure 4 (rest position) and Figure 5 (operational position). The robot arm 7 is connected capable of pivoting about a substantially vertical pivot pin 46 to a frame 47 which is attached to the slide block 45. This pivotal movement, which is indicated by arrows 48, is effected by means of an operating cylinder 49 which has one end connected to a support 50 of the frame 47. The piston rod 51 of the cylinder 49 is connected to a support 52 which is attached to the first position 53 of the robot arm 7. It will be obvious that, by operating the operating cylinder 49, the robot arm 7 can be pivoted from the rest position (Figure 4) to the operational position (Figure 5) and vice versa. It may be of importance for the robot arm 7 to be fixed under spring load, i.e. in such a manner that it can deflect when e.g. the animal kicks against it. In this embodiment, this can be achieved by constructing the operating cylinder 49 such that it can spring e.g. by a pneumatic means.

The robot arm 7 consists of a first portion 53 and a second portion 54 which is connected capable of pivoting about a pivot pin 55 to the said first portion 53. The pivotal movement about the pivot pin 55 is indicated by arrows 56 and is effected by means of a cylinder 58 whose end 59 is attached to the first portion 53 of the robot arm 7 and whose piston rod 60 is connected to the second portion 54 of the robot arm 7. As is apparent from Figures 4 and 5, by means of the operating cylinder 49, the robot arm 7 can be moved to under the animal present in the milking parlour, the pivot pin 55 being in a central position under the animal, i.e. between the animal's legs. Thereafter, by operating the operating cylinder 58, the second portion 54 of the robot arm 7 can be pivoted about the pivot pin 55 at a desired angle.

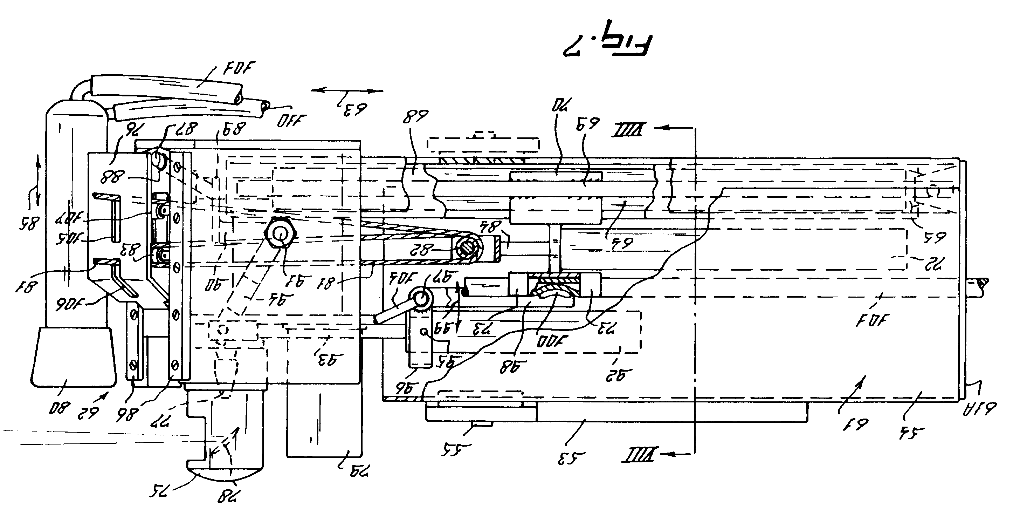

The second portion 54 of the robot arm 7, further details of which are shown in Figures 6, 7, 8 and 9, consists of a portion 61 which is connected pivotably to the first portion 53 of the robot arm 7 and a portion 62 which is axially movable relative to the portion 61, as is indicated by the arrows 63.

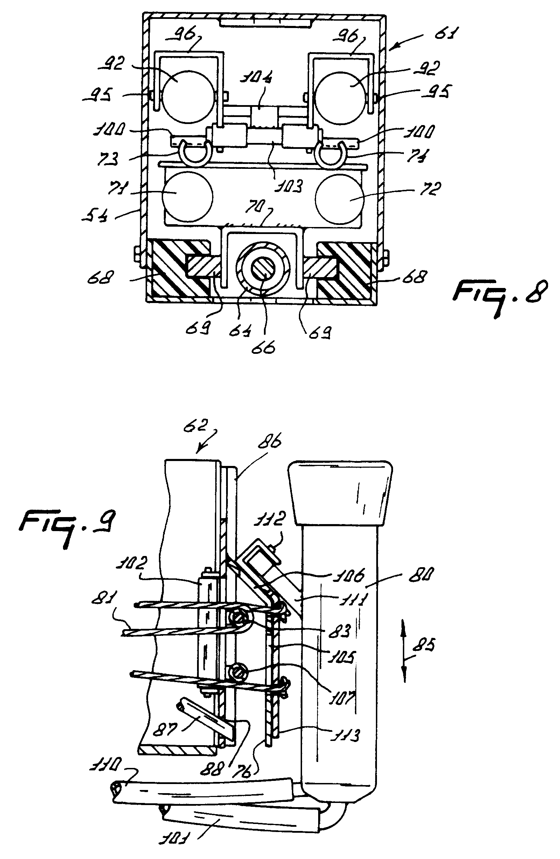

The portion 61 is of a substantially hollow construction, so that, in the inserted condition, the portion 62 is partly within the portion 61. Between the mutually slidable portions 61 and 62 there is arranged an operating cylinder 64, the end 65 of which is connected to the portion 61 of the second portion 54 of the robot arm 7. The piston rod 66 of the operating cylinder 64 has its end 67 connected to the portion 62 of the second portion 54 of the robot arm 7. The portions 61 and 62 are provided with guide means 68 and 69 which slidably engage each other and of which the guide means 68 is connected to the portion 61 and the guide means 69 to the portion 62 (see also Figure 8).

As is apparent from Figure 8, a set of guide means 68, 69 extends on either side of the second portion 54 of robot arm 7, the guide means 69 being interconnected by a U-shaped frame portion 70 to which furthermore are connected two operating cylinders 71 and 72 and two milk hose holders 73, 74. Their mode of operation will be described in greater detail hereinafter.

Near the ends of the guide means 69 that are shown at the right-hand side in Figure 7, the said guide means are also interconnected and support a number of component parts which can slide along with the guide means 69 relative to the further portions of the robot arm 7. These component parts are the detection means 75, the teat cup carriers 76 and the control means therefor.

In this embodiment, the detection means 75 consist in an ultrasonic sensor 77 capable of transmitting an ultrasonic signal in the upward direction, which signal is received after reflection, whereafter the distance to the reflecting object can be calculated, whilst the location of this object can be determined on the basis of the data as to the direction of the transmitted signal. The ultrasonic signal is transmitted upwardly by the sensor 77, whereafter it is reflected in an approximately horizontal direction by a somewhat concave reflector 78. The use of this concave reflector 78 achieves a more directional signal having e.g. a divergence of approximately 4°. The reflector 78 can be turned about a substantially vertical axis by means of an operating motor 79, so that it can perform both a rotational movement and a reciprocating (swinging) one. By performing this movement, a disc-shaped portion of the space, which approximates a plane, can be scanned for the presence of objects. The said plane may be a flat plane located perpendicularly to the rotational axis of the reflector 78, but also a conical plane having this axis as its axis of symmetry.

It will be obvious that the detection means 75 can establish the position of one or more teats of the animal's udder when the robot arm 7 is at the appropriate level. The detected position of the teat or teats is the position relative to the end of the robot arm 7, so that therefrom it can be derived directly what movements the operating cylinders 58 and 64 must perform in order to position a teat cup 80 under the relevant teat. During and directly after the end of the robot arm 7 has been moved, the detection means 75 can always track the position of the relevant teat, so that the relevant teat cup 80 is positioned, and remains so, under the feat to which it must be connected. The ultrasonic sensor transmits and receives a signal e.g. sixty times per second, so that it can always be checked whether the teat is already in the proper position relative to the robot arm 7. The use of this mode of direct control enables a very simple and hence cheap robot arm control.

A plurality of feat cups 80 can be arranged to the robot arm 7, but in principle these teat cups are not connected simultaneously to the relevant teats. Once a teat cup 80 has been moved in the above-described manner to under the teat to which if must be connected, it is moved upwardly and a vacuum is produced therewithin, so that the feat cup sucks to the teat. Thereafter the teat cup 80 is released from the robot arm 7, so that this robot arm 7 can move with the object of positioning a subsequent teat cup in the desired place. The following technical means are provided for performing the actions described in the foregoing.

At the end of the robot arm 7 there is/are provided one or more teat cup carriers 76, each of which can carry a teat cup 80. The teat cup 80 is pulled against the teat cup carrier 76 by means of a flexible connecting member in the form of a cord 81. In the embodiment shown, the two ends of cord 81 are connected to the teat cup 80, whilst from its end the cord is passed around a roller 82 and wrapped around a roller 83. The roller 83 is arranged in the slidable portion 62 of the robot arm 7, as is also the above-mentioned operating cylinder 72, whilst the roller 82 is arranged at the end of piston rod 84 of cylinder 72. If will be obvious that, when the piston rod 84 is retracted in the cylinder 72, this has as a result that the ends of cord 81 are tightened, so that the teat cup 80 connected thereto is clamped against the teat cup carrier 76. However, when the operating cylinder 72 is operated in such a way that the piston rod 84 moves therefrom, then the teat cup 80 is no longer clamped against the teat cup carrier 76 and if can move freely relative to the robot arm 7 and be connected to a teat of the udder. At any desired moment, e.g. when the milking procedure has ended or when for any other reason the teat cup is not connected to the teat, the teat cup 80 can be pulled against the teat cup carrier 76 again by operating the operating cylinder 72. Since the teat cup 80 is connected to the cord 81 in two places, it will always be kept in the proper position against the teat cup carrier 76.

As is shown in Figure 7 by means of arrows 85, the teat cup carrier 76 together with the teat cup 80 is adapted to slide upwardly, the teat cup carrier 76 sliding in guide means 86. The upward movement is effected by a rod 87 which extends through an aperture 88 into the teat cup carrier 76 and by means of ifs other end is pivotal about a pivot pin 91 via the portions 89 and 90 (indicated in Figure 7 by means of broken lines). Owing to the pivotal movement of the rod 87 about the pivot pin 91, the feat cup carrier 76 is moved in the vertical direction in the guide means 86, thereby imparting an upward movement to the teat cup 80.

This upward movement is effected by means of an operating cylinder 92 wherein a piston rod 93 can move axially, so that a lever 94 fitted to the end of the piston rod 93 pivots about the pivot pin 91 together with the rod 87. In this situation, the operating cylinder 92 is connected pivotably about a horizontal pivot pin 95 in a tilting member 96, the tilting member 96 being capable of pivoting about a pivotal axis 97 that is secured rigidly relative to the slidable portion 62 of the robot arm 7. A closing lever 98 which can perform the pivotal movement denoted by the arrows 99 is secured rigidly to the tilting member 96 and hence is pivotal about the pivotal axis 97. Near its end, the closing lever 98 is provided with a pressure member 100 which, as is shown in Figure 7, can flatten a milk hose 101 so as to block same. To that end, the milk hose 101 is passed through the milk hose holder 73 which grips the milk hose at either side of the region whereover it is flattened.

As has been described in the foregoing and shown in Figure 7, the operating cylinder 92 has two functions, i.e. the upward movement of teat cup carrier 76 and the blocking of the milk hose 101. In this connection, the milk hose 101 is always in the blocked condition as long as the teat cup carrier 76 is kept in the lowermost position, while the flattening of the milk hose 101 is terminated as soon as the teat cup carrier 76 moves upwardly. The above-described control mechanism is provided for each teat cup carrier 76, the present embodiment having two carriers 76.

Figure 6 furthermore shows how the cord 81 is guided by means of substantially vertically arranged guide rollers 102, and how a pin 103 is connected by means of plate 104 to the slidable portion 62 of the robot arm 7 so as to form the pivotal axis 97.

Figure 7 furthermore shows that the teat cup carrier 76 is provided with recessed portions 105 and 106 through which the cord 81 is passed, which recessed portions 105, 106 extend in the vertical direction, so that the cord 81 has some freedom of movement relative to the teat cup carrier 76. Furthermore a roller 107 is fitted to the teat cup carrier 76 below the roller 83, which two rollers ensure a proper guiding of the cord 81.

Figure 9 shows the teat cup carrier 76 and the teat cup 80 in greater detail. The teat cup 80 includes the milk hose 101 and a pulsating hose 110, the two of which are connected with the required clearance to the robot arm 7, and the milk hose 101 being connected in the above-described manner to milk hose holder 73. The teat cup 80 is furthermore provided with a connection arm 111 that is arranged pivotably about a pin 112 to connection member 113. The connection member 113 is connected to the ends of the cord 81, so that this connection member 113 is pulled up against the teat cup carrier 76. It will be obvious that the teat cup 80 has some freedom of movement about the pin 112; optionally, this freedom of movement may be limited by applying spring-loaded means to keep the teat cup 80 in an approximately vertical position. The extension of the pin 112 passes through the centre of the aperture of the teat cup 80, so that, when pivoted upwardly, this aperture approximately maintains its position.

The illustrated embodiment of the implement for milking an animal operates as follows.

After an animal has entered the milking parlour and has walked on until a further forward movement is limited by the means appropriate thereto, e.g. a stop and/or a feeding arrangement, the sensor device 5 is pivoted through approximately 90° by means of the operating cylinder 22, whereafter the sensor device 5 moves towards the animal until the sensor 28 bears against its rear side and continues to bear thereon by means of control means 27, so that the frame 6, 12 carrying the robot arm 7 always remains in approximately the same position relative to the animal.

By means of an animal recognition system (not shown in the drawings), it is established which animal is present in the milking parlour and, by means of a data processing arrangement (computer) (not shown either in the drawings), further details about the relevant animal are known. For example, it is known how much time has elapsed since the animal was milked last, so that the shape of the udder, which partly depends on the quantity of milk contained therein, is roughly known. On the basis of this information the robot arm 7 can be brought by means of the operating cylinder 41 at a desired level, which level serves as the starting height for the search of the teats of the udder. Thereafter, by means of the operating cylinder 49, the robot arm 7 is pivoted through approximately 90°, so that the second portion 54 of the robot arm 7 is located under the animal. During this pivotal movement of the robot arm 7 to under the animal, the frame beams 6 and 37 can be displaced additionally by the operating cylinder 14 so as to prevent the animal from being contacted by the robot arm 7 during pivoting. On the basis of the afore-mentioned information, the end of robot arm 7, too, can be adjusted to the desired starting position by means of the operating cylinders 58 and 64, whereafter by means of the detection means 75 a region is scanned so as to check whether one or more teats are located therein. In case nothing is found, the robot arm 7 is moved slightly upwardly by means of the operating cylinder 41 and a further check is made in search of the presence of one or more teats. As soon as in this manner has/have been detected one or more teats, whose position(s) approximately corresponds/correspond to the data known of the relevant animal, the detection means concentrate on one teat only in order to move the relevant teat cup to under that teat and to move if upwardly thereafter, as has been described already in the foregoing. These actions are repeated until all the teat cups have been applied.

In the embodiment shown, the robot arm 7 supports two teat cups 80. However, it is alternatively possible, with the object of applying e.g. four teat cups on a cow, to provide the end of the robot arm 7 with four teat cup carriers which are otherwise operable in the above-described manner. Alternatively, if is possible to provide not all the teats of the udder with a teat cup by means of the described robot arm, the remaining teat cups being applied from a different direction, e.g. from the rear side.

In addition, the required number of sensors can be present for detecting and checking the various actions, such as detecting whether a teat cup has been applied in the correct manner or has not been applied, whereafter the relevant teat cup can be returned by means of cord 81 to the starting position for a renewed application.

## Claims

1. An implement for milking an animal, for example a cow, which implement includes a milking parlour where the animal can be present in a substantially predetermined position and a robot arm (7) carrying teat cups (80) near its end, which robot arm (7) is provided with a substantially vertical first pivot pin (55) around which the end of the robot arm (7) is capable of pivoting in a substantially horizontal plane, which robot arm (7) is furthermore pivotable about a substantially vertical second pivot pin (46) which is located outside the milking parlour, or near the wall thereof, and approximately in the region of the animal's udder or still further to the rear, characterized in that the robot arm approaches the animal's udder substantially from the front side, whereby the first pivot pin can be positioned between the animal's legs, the end of the robot arm being movable relative to the milking parlour substantially in the longitudinal direction by changing its distance to said first pivot pin, the said robot arm (7) being connected via the second pivot pin (46) to a frame (6, 37) which is movable relative to the milking parlour in the longitudinal direction, while the implement is furthermore provided with means (86 to 91) for individually applying each teat cup (80) to a feat by means of a substantially upward movement of the relevant teat cup (80).

2. An implement as claimed in claim 1, characterized in that there is provided a sensor device (5) capable of establishing the animal's position in the milking parlour.

3. An implement as claimed in claim 2, characterized in that the sensor device (5) establishes the animal's position in the longitudinal direction relative to the milking parlour.

4. An implement as claimed in claim 3, characterized in that the sensor device (5) for establishing the animal's position is connected mechanically to the movable frame (6, 37), and that the movable frame (6, 37) is movable in dependence on the animal's position in the longitudinal direction relative to the milking parlour.

5. An implement as claimed in any one of claims 2 to 4, characterized in that there are provided means (22, 27) for determining the position of the sensor device (5) relative to the robot arm (7) in dependence on the relevant animal.

6. An implement as claimed in claim 5, characterized in that the sensor device (5) is provided with a stop (28) bearing against the animal, while there are arranged actuating means (14) for moving the sensor device (5) in dependence on the position of the stop (28).

7. An implement as claimed in any one of the preceding claims, characterized in that the robot arm (7) is connected to the movable frame (6, 37) movably in height.

8. An implement as claimed in any one of the preceding claims, characterized in that the robot arm (7) comprises at the upper side near the end thereof detection means (75) capable of establishing the position of an object, e.g. a teat, in a plane of a substantially flat or conical shape.

9. An implement as claimed in claim 8, characterized in that the plane is substantially horizontal and is positioned above a teat cup (80) which is arranged near the end of the robot arm (7) and is supported thereby.

10. An implement as claimed in claim 8 or 9, characterized in that the detection means (75) are provided with a sensor (77) which transmits and/or receives a directional signal, e.g. an ultrasonic transducer.

11. An implement as claimed in claim 10, characterized in that the signal is reflected by a concave mirror (78) mounted near the sensor (77), whereby the signal is deflected through an angle of approximately 90° in a substantially rearward direction and a more accurately directed bundle is produced.

12. An implement as claimed in claim 10 or 11, characterized in that the sensor (77) and/or the mirror (78) can pivot or rotate about a substantially vertical axis.

13. An implement as claimed in claim 12, characterized in that the sensor (77) and/or the mirror (78) performs a reciprocating movement within a predetermined area.

14. An implement as claimed in any one of claims 8 to 13, characterized in that a computer is present for calculating the position of a detected object (teat or teats) relative to the end of the robot arm (7) and for producing signals on the basis of which control means move the robot arm (7), so that a teat cup (80) carried by the robot arm (7) can be moved to under a teat of the animal's udder.

15. An implement as claimed in claim 14, characterized in that the control means are provided with hydraulic and/or pneumatic operating cylinders and/or a spindle readjusting means (14, 41, 49, 58, 64).

16. An implement as claimed in any one of claims 1 to 15, characterized in that the teat cup (80) is connected to the robot arm (7) via at least one flexible connecting member (81) which is capable of forming a flexible connection between the robot arm (7) and the teat cup (80) during milking and is capable of pulling the teat cup (80) to the robot arm (7).

17. An implement as claimed in claim 16, characterized in that the flexible connecting member (81) consists of a wire or a rope, e.g. made of a synthetic resin material and/or a metal, and that therefor there are provided guide means (82, 83) which are constituted by rollers or similar component parts having rounded corners.

18. An implement as claimed in claim 16 or 17, characterized in that the flexible connecting member (81) is connected to a teat cup holder (76), to which the teat cup (80) is connected pivotably, preferably near its upper end, the pivotal axis of which is at an angle with the vertical, the said axis passing through the aperture of the teat cup (80).

19. An implement as claimed in any one of claims 16 to 18, characterized in that there are provided drive means (71) for pulling the connecting member (81), so that the teat cup (80), which during milking is remote from the end of the robot arm (7), can be pulled towards the robot arm (7).

20. An implement as claimed in claim 19, characterized in that the drive means (71) are provided with a pneumatic or a hydraulic cylinder accommodated in the robot arm (7).

21. An implement as claimed in any one of claims 1 to 20, characterized in that the teat cup (80) can be moved upwardly relative to the robot arm (7), and that there are provided means for producing a vacuum in the teat cup (80) approximately simultaneously with the upward movement.

22. An implement as claimed in claim 21, characterized in that, for each teat cup (80), the robot arm (7) is provided near its end with an upwardly slidable supporting element (76), against which the teat cup (80) can be pulled by means of the flexible connecting member (81).

23. An implement as claimed in claim 22, characterized in that the supporting element (76) is provided with at least one recessed portion (105) through which the flexible connecting member (81) passes, the said recessed portion (105) being in substance a vertically extending slot.

24. An implement as claimed in any one of claims 1 to 23, characterized by means for closing the milk hose (101) and/or the pulsating hose (110) for the period of time wherein the teat cup (80) is supported by the robot arm (7).

25. An implement as claimed in claim 24, characterized in that a portion of the hose (101) applied in a holder (73) is flattened by means of a lever (98) which is operated simultaneously with the upward movement of the teat cup (80) relative to the robot arm (7).

26. An implement as claimed in claim 25, characterized in that a cylinder/piston unit (92) is connected by means of its one end to a control lever (94) for upwardly moving the teat cup (80) and by means of its other end to a control lever (98) for flattening the hose.

27. A method of milking an animal, for example a cow, whereby the animal is guided to the milking parlour and is recognized therein by means of an animal recognition system, whereafter a robot arm (7) assumes a previously determined starting position, characterized in that when the animal is present in the milking parlour the robot arm (7) is pivoted into the space under the animal's udder, the udder being approached from the frontside, while the robot arm (7) is simultaneously moved forwardly until a sensor device (5) comes to bear against the rear side of the animal, by means of which sensor device (5) the robot arm (7) can be moved such in the longitudinal direction that, when the animal moves in the longitudinal direction, the robot arm (7) is thereby maintained in approximately the same position thereunder, whereby a sensor (77) coupled to the robot arm (7) roughly establishes the presence and/or the position of one or more teats by scanning a horizontal disc-shaped portion of space or part thereof, and whereafter, when one or more teats are not detected in the desired manner, the robot arm (7) is adjusted to a higher or to a different position until one or more teats are detected in a desired position, whereafter, optionally after the robot arm (7) has been moved closer to the teats, the sensor (77) orients itself to the position of one teat, whereafter the relevant teat cup (80) is moved to under that teat, during which action the sensor (77) continues to detect the teat, whereafter in a known way, the teat cup (80) is moved upwardly and a vacuum is produced in the teat cup (80).

28. A method as claimed in claim 27, characterized in that a plurality of teat cups (80) carried by the robot arm (7) are sequentially applied to the various teats of the animal's udder, first the teats that are in a more rearward position being provided with a teat cup (80).

29. A method as claimed in claim 27 or 28, characterized in that the teat cups (80) remain connected to the robot arm (7) via a flexible connecting member (81), by means of which the teat cup (80) is pulled towards and against a position intended therefor near the end of the robot arm (7), when the milking with the relevant teat cup (80) has ended or when the application of the teat cup (80) to the relevant teat has failed.

## Patentansprüche

1. Vorrichtung zum Melken eines Tieres, wie zum Beispiel einer Kuh, mit einem Melkstand, in dem sich das Tier in einer im wesentlichen vorbestimmten Position aufhalten kann, und mit einem Roboterarm (7), der in der Nähe seines Endes Melkbecher (80) trägt, wobei der Roboterarm (7) mit einem im wesentlichen vertikalen ersten Schwenkstift (55) versehen ist, um den das Ende des Roboterarms (7) in einer im wesentlichen horizontalen Ebene schwenkbar ist, wobei der Roboterarm (7) außerdem um einen im wesentlichen vertikalen zweiten Schwenkstift (46) schwenkbar ist, der sich außerhalb oder in der Nähe der Wand des Melkstands in etwa im Bereich des Tiereuters oder noch weiter hinten befindet,
dadurch gekennzeichnet, daß sich der Roboterarm dem Tiereuter im wesentlichen von der Vorderseite her nähert, wobei sich der erste Schwenkstift zwischen den Beinen des Tieres Positionieren läßt und sich das Ende des Roboterarms dadurch relativ zu dem Melkstand im wesentlichen in Längsrichtung bewegen läßt, daß man seine Distanz zu dem ersten Schwenkstift verändert, wobei der genannte Roboterarm (7) über den zweiten Schwenkstift (46) mit einem Rahmen (6, 37) verbunden ist, der relativ zu dem Melkstand in Längsrichtung beweglich ist, wobei die Vorrichtung außerdem mit einer Einrichtung (86 bis 91) zum einzelnen Anbringen jedes Melkbechers (80) an einer Zitze durch eine im wesentlichen nach oben gehende Bewegung des betreffenden Melkbechers (80) versehen ist.

2. Vorrichtung nach Anspruch 1,
dadurch gekennzeichnet, daß eine Sensorvorrichtung (5) vorgesehen ist, mit der sich die Position des Tieres in dem Melkstand feststellen läßt.

3. Vorrichtung nach Anspruch 2,
dadurch gekennzeichnet, daß die Sensorvorrichtung (5) die Position des Tieres in Längsrichtung relativ zu dem Melkstand feststellt.

4. Vorrichtung nach Anspruch 3,
dadurch gekennzeichnet, daß die Vorrichtung (5) zum Feststellen der Position des Tieres mit dem beweglichen Rahmen (6, 37) mechanisch verbunden ist, und daß der bewegliche Rahmen (6, 37) in Abhängigkeit von der Position des Tieres in Längsrichtung relativ zu dem Melkstand beweglich ist.

5. Vorrichtung nach einem der Ansprüche 2 bis 4,
dadurch gekennzeichnet, daß Einrichtungen (22, 27) zum Bestimmen der Lage der Sensorvorrichtung (5) relativ zu dem Roboterarm (7) abhängig von dem betreffenden Tier vorgesehen sind.

6. Vorrichtung nach Anspruch 5,
dadurch gekennzeichnet, daß die Sensorvorrichtung (5) mit einem gegen das Tier drückenden Anschlag (28) versehen ist, wobei Betätigungseinrichtungen (14) zum Bewegen der Sensorvorrichtung (5) abhängig von der Position des Anschlags (28) vorhanden sind.

7. Vorrichtung nach einem der vorausgehenden Ansprüche,
dadurch gekennzeichnet, daß der Roboterarm (7) höhenverstellbar mit dem beweglichen Rahmen (6, 37) verbunden ist.

8. Vorrichtung nach einem der vorausgehenden Ansprüche,
dadurch gekennzeichnet, daß der Roboterarm (7) an seiner Oberseite nahe bei seinem Ende eine Erkennungseinrichtung (75) aufweist, mit der sich die Lage eines Objekts, wie zum Beispiel einer Zitze, in einer Ebene von im wesentlichen flacher oder konischer Gestalt feststellen läßt.

9. Vorrichtung nach Anspruch 8,
dadurch gekennzeichnet, daß die Ebene im wesentlichen horizontal ist und sich oberhalb eines Melkbechers (80) befindet, der nahe dem Ende des Roboterarms (7) angeordnet ist und von diesem getragen wird.

10. Vorrichtung nach Anspruch 8 oder 9,
dadurch gekennzeichnet, daß die Erkennungseinrichtung (75) mit einem Sensor (77) versehen ist, der ein Richtungssignal aussendet und/oder empfängt, und bei dem es sich zum Beispiel um einen Ultraschallwandler handelt.

11. Vorrichtung nach Anspruch 10,
dadurch gekennzeichnet, daß das Signal von einem nahe dem Sensor (77) angebrachten konkaven Spiegel (78) reflektiert wird, wodurch das Signal in einem Winkel von ca. 90° im wesentlichen in Richtung nach hinten umgelenkt wird und ein exakter gerichtetes Bündel erzeugt wird.

12. Vorrichtung nach Anspruch 10 oder 11,
dadurch gekennzeichnet, daß der Sensor (77) und/oder der Spiegel (78) um eine im wesentlichen vertikale Achse schwenkbar oder drehbar ist bzw. sind.

13. Vorrichtung nach Anspruch 12,
dadurch gekennzeichnet, daß der Sensor (77) und/oder der Spiegel (78) innerhalb eines vorbestimmten Bereichs eine Hin- und Herbewegung ausführt bzw. ausführen.

14. Vorrichtung nach einem der Ansprüche 8 bis 13,
dadurch gekennzeichnet, daß ein Computer vorhanden ist zum Errechnen der Position eines detektierten Objekts (Zitze oder Zitzen) relativ zu dem Ende des Roboterarms (7) sowie zum Erzeugen von Signalen, auf deren Basis Steuereinrichtungen den Roboterarm (7) derart bewegen, daß sich ein von dem Roboterarm (7) getragener Melkbecher unter eine Zitze des Tiereuters bewegen läßt.

15. Vorrichtung nach Anspruch 14,
dadurch gekennzeichnet, daß die Steuereinrichtungen mit hydraulischen und/oder pneumatischen Betätigungszylindern und/oder einer Spindelverstelleinrichtung (14, 41, 49, 58, 64) versehen sind.

16. Vorrichtung nach einem der Ansprüche 1 bis 15,
dadurch gekennzeichnet, daß der Melkbecher (80) mit dem Roboterarm (7) über wenigstens ein flexibles Verbindungselement (81) verbunden ist, das zur Bildung einer flexiblen Verbindung zwischen dem Roboterarm (7) und dem Melkbecher (80) während des Melkvorgangs ausgelegt ist und in der Lage ist, den Melkbecher (80) zu dem Roboterarm (7) zu ziehen.

17. Vorrichtung nach Anspruch 16,
dadurch gekennzeichnet, daß das flexible Verbindungselement (81) aus einem Draht oder einem Seil besteht, der bzw. das aus einem Kunstharzmaterial und/oder einem Metall besteht, und daß Führungsmittel hierfür vorgesehen sind, die durch Rollen oder ähnliche Teile mit abgerundeten Ecken gebildet sind.

18. Vorrichtung nach Anspruch 16 oder 17,
dadurch gekennzeichnet, daß das flexible Verbindungselement (81) mit einem Melkbecherhalter (76) verbunden ist, mit dem der Melkbecher (80) vorzugsweise nahe bei dessen oberem Ende schwenkbar verbunden ist, wobei seine Schwenkachse in einem Winkel zur Vertikalen verläuft und diese Achse durch die Öffnung des Melkbechers (80) verläuft.

19. Vorrichtung nach einem der Ansprüche 16 bis 18,
dadurch gekennzeichnet, daß Antriebseinrichtungen (71) zum Ziehen an dem Verbindungselement (81) vorgesehen sind, so daß sich der Melkbecher (80), der während des Melkvorgangs entfernt von dem Ende des Roboterarms (7) angeordnet ist, zu dem Roboterarm (7) hin ziehen läßt.

20. Vorrichtung nach Anspruch 19,
dadurch gekennzeichnet, daß die Antriebseinrichtungen (71) mit einem in dem Roboterarm (7) untergebrachten pneumatischen oder hydraulischen Zylinder versehen sind.

21. Vorrichtung nach einem der Ansprüche 1 bis 20,
dadurch gekennzeichnet, daß sich der Melkbecher (80) relativ zu dem Roboterarm (7) nach oben bewegen läßt, und daß Einrichtungen zum Erzeugen eines Vakuums in dem Melkbecher (80) im wesentlichen gleichzeitig mit der nach oben gehenden Bewegung vorgesehen sind.

22. Vorrichtung nach Anspruch 21,
dadurch gekennzeichnet, daß für jeden Melkbecher (80) der Roboterarm (7) nahe bei seinem Ende mit einem nach oben verschiebbaren Halterungselement (76) versehen ist, gegen das sich der Melkbecher (80) mittels des flexiblen Verbindungselements (81) ziehen läßt.

23. Vorrichtung nach Anspruch 22,
dadurch gekennzeichnet, daß das Halterungselement (76) mit wenigstens einem Aussparungsbereich (105) versehen ist, durch den das flexible Verbindungselement (81) hindurchläuft, wobei es sich bei dem Aussparungsbereich (105) im wesentlichen um einen vertikal verlaufenden Schlitz handelt.

24. Vorrichtung nach einem der Ansprüche 1 bis 23,
gekennzeichnet durch eine Einrichtung zum Schließen des Milchschlauchs (101) und/oder des Pulsierschlauchs (110) für die Zeitdauer, in der der Melkbecher (80) von dem Roboterarm (7) getragen wird.

25. Vorrichtung nach Anspruch 24,
dadurch gekennzeichnet, daß ein Bereich des in einem Halter (73) angebrachten Schlauchs (101) mittels eines Hebels (98) flachgedrückt wird, der gleichzeitig mit der nach oben gehenden Bewegung des Melkbechers (80) relativ zu dem Roboterarm (7) betätigt wird.

26. Vorrichtung nach Anspruch 25,
dadurch gekennzeichnet, daß eine Kolben- und Zylindereinheit (92) mit ihrem einen Ende mit einem Steuerhebel (94) zum Bewegen des Melkbechers (80) nach oben und mit ihrem anderen Ende mit einem Steuerhebel (98) zum Flachdrücken des Schlauchs verbunden ist.

27. Verfahren zum Melken eines Tieres, wie zum Beispiel einer Kuh, bei dem das Tier in den Melkstand geführt wird und in diesem mittels eines Tiererkennungssystems erkannt wird, wonach ein Roboterarm (7) eine zuvor festgelegte Ausgangsposition einnimmt,
dadurch gekennzeichnet, daß bei in dem Melkstand befindlichem Tier der Roboterarm (7) in den Raum unter dem Tiereuter geschwenkt wird, wobei die Annäherung an das Euter von der Vorderseite her erfolgt, indem der Roboterarm (7) gleichzeitig nach vorne bewegt wird, bis eine Sensorvorrichtung (5) in Anlage an die Rückseite des Tieres gelangt, mittels der sich der Roboterarm (7) derart in Längsrichtung bewegen läßt, daß bei einer Bewegung des Tieres in Längsrichtung der Roboterarm (7) dadurch im wesentlichen in derselben Position darunter gehalten wird, wobei ein mit dem Roboterarm (7) gekoppelter Sensor (77) eine grobe Erkennung des Vorhandenseins und/oder der Position einer oder mehrerer Zitzen durch Abtasten eines horizontalen scheibenförmigen Raumbereichs oder eines Teils davon ausführt, wonach dann, wenn eine oder mehrere Zitzen nicht in der erwünschten Weise detektiert werden, der Roboterarm (7) in eine höhere oder in eine andere Position verstellt wird, bis eine oder mehrere Zitzen in einer gewünschten Position detektiert werden, wonach dann, wahlweise nach einer Bewegung des Roboterarms (7) näher zu den Zitzen hin, der Sensor (77) sich auf die Lage einer Zitze ausrichtet, wonach der betreffende Melkbecher (80) unter diese Zitze bewegt wird, wobei der Sensor (77) während dieses Vorgangs mit der Detektion der Zitze fortfährt, wonach in bekannter Weise der Melkbecher (80) nach oben bewegt wird und in dem Melkbecher (80) ein Vakuum erzeugt wird.

28. Verfahren nach Anspruch 27,
dadurch gekennzeichnet, daß mehrere von dem Roboterarm (7) getragene Melkbecher (80) nacheinander an den verschiedenen Zitzen des Tiereuters angebracht werden, wobei zuerst die weiter hinten liegenden Zitzen mit einem Melkbecher (80) versehen werden.

29. Verfahren nach Anspruch 27 oder 28,
dadurch gekennzeichnet, daß die Melkbecher (80) mit dem Roboterarm (7) über ein flexibles Verbindungselement (81) verbunden bleiben, durch das der Melkbecher (80) in Richtung auf und gegen eine dafür bestimmte Position nahe dem Ende des Roboterarms (7) gezogen wird, wenn das Melken mit dem betreffenden Melkbecher (80) beendet ist, oder wenn die Anbringung des Melkbechers (80) an der betreffenden Zitze fehlgeschlagen ist.

## Revendications

1. Machine pour traire un animal, par exemple une vache, cette machine comprenant une stalle de traite où l'animal peut être présent en une position substantiellement déterminée, et un bras de robot (7) portant des ventouses de trayons (80) près de son extrémité, lequel bras de robot (7) est muni d'un premier pivot (55) sensiblement vertical autour duquel l'extrémité du bras de robot (7) est capable de pivoter dans un plan sensiblement horizontal, lequel bras de robot (7) est en outre pivotant autour d'un deuxième pivot (46) sensiblement vertical, qui est situé à l'extérieur de la stalle de traite ou près de la paroi de celle-ci, et approximativement dans la région du pis de l'animal ou encore plus loin à l'arrière, caractérisée en ce que le bras de robot s'approche du pis de l'animal sensiblement à partir du côté antérieur, ce qui fait que le premier pivot peut être positionné entre les pattes de l'animal, l'extrémité du bras de robot étant mobile par rapport à la stalle de traite, sensiblement dans le sens longitudinal, en changeant sa distance par rapport audit premier pivot, ledit bras de robot (7) étant relié par le deuxième pivot (46) à un châssis (6, 37) qui est mobile par rapport à la stalle de traite dans le sens longitudinal, tandis que la machine est munie en outre de moyens (86 à 91) pour appliquer individuellement chaque ventouse de trayon (80) à un trayon au moyen d'un mouvement, sensiblement vers le haut, de la ventouse de trayon (80) correspondante.

2. Machine selon la revendication 1, caractérisée en ce qu'il est prévu un dispositif capteur (5) capable de déterminer la position de l'animal dans la stalle de traite.

3. Machine selon la revendication 2, caractérisée en ce que le dispositif capteur (5) détermine la position de l'animal dans le sens longitudinal par rapport à la stalle de traite.

4. Machine selon la revendication 3, caractérisée en ce que le dispositif capteur (5) pour déterminer la position de l'animal est relié mécaniquement au châssis mobile (6, 37) et en ce que le châssis mobile (6, 37) est mobile en dépendance de la position de l'animal dans le sens longitudinal par rapport à la stalle de traite.

5. Machine selon l'une quelconque des revendications 2 à 4, caractérisée en ce que des moyens (22, 27) sont prévus pour déterminer la position du dispositif capteur (5) par rapport au bras de robot (7) en dépendance de l'animal concerné.

6. Machine selon la revendication 5, caractérisée en ce que le dispositif capteur (5) est muni d'une butée (28) portant contre l'animal, tandis que des moyens actionneurs (14)sont agencés pour faire mouvoir le dispositif capteur (5) en dépendance de la position de la butée (28).

7. Machine selon l'une quelconque des revendications précédentes, caractérisée en ce que le bras de robot (7) est relié au châssis mobile (6, 37) en étant mobile en hauteur.

8. Machine selon l'une quelconque des revendications précédentes, caractérisée en ce que le bras de robot (7) comprend, sur son côté supérieur, près de l'extrémité de celui-ci, des moyens de détection (75) capables de déterminer la position d'un objet, par exemple un trayon, dans un plan de forme sensiblement plate ou conique.

9. Machine selon la revendication 8, caractérisée en ce que le plan est sensiblement horizontal et est situé au dessus d'une ventouse de trayon (80) qui est disposée près de l'extrémité du bras de robot (7) et est supportée par celui-ci.

10. Machine selon la revendication 8 ou 9, caractérisée en ce que les moyens de détection (75) sont munis d'un capteur (77) qui émet et/ou reçoit un signal directionnel, par exemple un transducteur ultrasonique.

11. Machine selon la revendication 10, caractérisée en ce que le signal est réfléchi par un miroir concave (78) monté près du capteur (77), grâce auquel le signal est dévié d'un angle d'environ 90° dans une direction sensiblement vers l'arrière, et un faisceau dirigé plus précisément est produit.

12. Machine selon la revendication 10 ou 11, caractérisée en ce que le capteur (77) et/ou le miroir (78) peuvent pivoter ou tourner autour d'une axe sensiblement vertical.

13. Machine selon la revendication 12, caractérisée en ce que le capteur (77) et/ou le miroir (78) exécutent un mouvement alternatif dans les limites d'une zone prédéterminée.

14. Machine selon l'une quelconque des revendications 8 à 13, caractérisée en ce qu'un ordinateur est présent pour calculer la position d'un objet détecté (trayon ou trayons) par rapport à l'extrémité du bras de robot (7) et pour produire des signaux d'après lesquels des moyens de commande font mouvoir le bras de robot (7), de telle sorte qu'une ventouse de trayon (80) portée par le bras de robot (7) peut être amenée sous un trayon du pis de l'animal.

15. Machine selon la revendication 14, caractérisée en ce que les moyens de commande sont munis de vérins actionneurs hydrauliques et/ou pneumatiques et/ou d'un moyen pour réajuster un pivot (14, 41, 49, 58, 64).

16. machine selon l'une quelconque des revendications 1 à 15, caractérisée en ce que la ventouse de trayon (80) est reliée au bras de robot (7) par au moins un organe de liaison flexible (81) qui est capable de former une liaison flexible entre le bras de robot (7) et la ventouse de trayon (80) pendant la traite et qui est capable de tirer la ventouse de trayon (80) vers le bras de robot (7).

17. Machine selon la revendication 16, caractérisée en ce que l'organe de liaison flexible (81) consiste en un fil métallique ou une corde faite, par exemple, d'une motière de résine synthétique et/ou d'un métal, et en ce que des moyens de guidage (82, 83) sont prévus pour celui-ci, en étant constitués par des rouleaux ou des éléments similaires ayant des coins arrondis.

18. Machine selon la revendication 16 ou 17, caractérisée en ce que l'organe de liaison flexible (81) est relié à un support (76) de ventouse de trayon, auquel la ventouse de trayon (80) est reliée de manière pivotante, de préférence près de son extrémité supérieure, son axe de pivotement faisant un angle avec la verticale, ledit axe traversant l'ouverture de la ventouse de trayon (80).

19. Machine selon l'une quelconque des revendications 16 à 18, caractérisée en ce que des moyens d'entraînement (71) sont prévus pour tirer l'organe de liaison, de telle sorte que la ventouse de trayon (80) qui est, au cours de la traite, loin de l'extrémité du bras de robot (7) puisse être tirée vers le bras de robot (7).

20. Machine selon la revendication 19, caractérisée en ce que les moyens d'entraînement (71) sont munis d'un vérin pneumatique ou hydraulique logé dans le bras de robot (7).

21. Machine selon l'une quelconque des revendications 1 à 20, caractérisée en ce que la ventouse de trayon (80) peut être entraînée vers le haut, par rapport au bras de robot (7), et en ce que des moyens sont prévus pour produire un vide dans la ventouse de trayon (80), approximativement simultanément avec le mouvement vers le haut.

22. Machine selon la revendication 21, caractérisée en ce que, pour chaque ventouse de trayon (80) , le bras de robot (7) est muni, près de son extrémité, d'un élément de support (76) pouvant coulisser vers le haut, contre lequel la ventouse de trayon (80) peut être tirée au moyen de l'organe de liaison flexible (81).

23. Machine selon la revendication 22, caractérisée en ce que l'élément de support (76) est muni d'au moins une partie renfoncée (105) à travers laquelle passe l'organe de liaison flexible (81), ladite partie renfoncée (105) étant en substance une fente s'étendant verticalement.

24. Machine selon l'une quelconque des revendications 1 à 23, caractérisée par des moyens pour obturer le tuyau à lait (101) et/ou le tuyau de pulsation (110) pendant la période de temps dans laquelle la ventouse de trayon (80) est supportée par le bras de robot (7).

25. Machine selon la revendication 24, caractérisée en ce qu'une partie du tuyau souple (101) appliquée dans un support (73) est aplatie au moyen d'un levier (98) qui est actionné simultanément avec le mouvement de la ventouse de trayon (80) vers le haut, par rapport au bras de robot (7).

26. Machine selon la revendication 25, caractérisée en ce qu'un vérin (92) est relié par une de ses extrémités à un levier de commande (94) pour entraîner la ventouse de trayon (80) vers le haut, et est relié par son autre extrémité à un levier de commande (98) pour aplatir le tuyau flexible.

27. Méthode pour traire un animal, par exemple une vache, dans laquelle l'animal est guidé jusqu'à la stalle de traite où il est reconnu au moyen d'un système de reconnaissance des animaux, après quoi un bras de robot (7) prend une position de départ déterminée préalablement, caractérisée en ce que, quand l'animal est présent dans la stalle de traite, le bras de robot (7) est pivoté dans l'espace sous le pis de l'animal, le pis étant approché à partir du côté antérieur, tandis que le bras de robot (7) est simultanément entraîné vers l'avant jusqu'à ce qu'un dispositif capteur (5) vienne porter contre le côté postérieur de l'animal, le bras de robot (7) pouvant être entraîné au moyen de ce dispositif capteur (5) dans le sens longitudinal, de telle sorte que le bras de robot (7) soit, de ce fait, maintenu approximativement dans la même position sous l'animal, tandis qu'un capteur (77) relié au bras de robot (7) détermine sommairement la présence et/ou la position d'un ou plusieurs trayons en explorant une portion horizontale de l'espace en forme de disque, ou une partie de celle-ci, et ensuite, quand un ou plusieurs trayons ne sont pas détectés de la manière voulue, le bras de robot (7) est réglé sur une position plus haute ou différente, jusqu'à ce qu'un ou plusieurs trayons soient détectés en une position voulue, après quoi, optionnellement après que le bras de robot (7) aura été rapproché des trayons, le capteur (77) s'oriente vers la position d'un trayon, après quoi la ventouse de trayon (80) correspondante est entraînée jusqu'au dessous de ce trayon, tandis que pendant cette action le capteur (77) continue à détecter le trayon, après quoi, de manière connue, la ventouse de trayon (80) est entraînée vers le haut et un vide est produit dans la ventouse de trayon (80).

28. Méthode selon la revendication 27, caractérisée en ce qu'une pluralité de ventouses de trayons (80) portées par le bras de robot (7) sont appliquées séquentiellement aux divers trayons du pis de l'animal, les trayons situés en une position plus à l'arrière étant, en premier lieu, munis d'une ventouse de trayon (80).

29. Méthode selon la revendication 27 ou 28, caractérisée en ce que les ventouses de trayons (80) restent reliées au bras de robot (7) au moyen d'un organe de liaison flexible (81) au moyen duquel la ventouse de trayon (80) est tirée vers et contre une position prévue à cet effet près de l'extrémité du bras de robot (7) quand la traite avec la ventouse de trayon (80) correspondante est terminée, ou quand l'application de la ventouse de trayon (80) au trayon pertinent a échoué.
